## Europäisches Patentamt
## European Patent Office
## Office européen des brevets

(11) Veröffentlichungsnummer: **0 063 241**
**A1**

(12) ## EUROPÄISCHE PATENTANMELDUNG

(21) Anmeldenummer: 82102209.2

(22) Anmeldetag: 18.03.82

(51) Int. Cl.³: **A 47 J 43/08**
**A 47 J 43/044**

(30) Priorität: 04.04.81 DE 3113760
03.04.81 DE 8110077 U

(43) Veröffentlichungstag der Anmeldung:
27.10.82 Patentblatt 82/43

(84) Benannte Vertragsstaaten:
AT CH DE FR GB IT LI NL SE

(71) Anmelder: Braun Aktiengesellschaft
Rüsselsheimer Strasse 22
D-6000 Frankfurt/Main(DE)

(72) Erfinder: Falkenbach, Günther
Leiershohl-Strasse 18 a
D-6236 Eschborn I(DE)

(72) Erfinder: Seuwen, Dieter
Am Steinberg 23
D-6000 Frankfurt 56(DE)

(72) Erfinder: Schneider, Jürgen
Oberurseler Strasse 59 a
D-6242 Kronberg 2(DE)

(72) Erfinder: Kahlcke, Hartwig
Parkstrasse 9
D-6232 Bad Soden(DE)

(74) Vertreter: Einsele, Rolf
Braun Aktiengesellschaft Postfach 1120 Frankfurter
Strasse 145
D-6242 Kronberg/Taunus(DE)

(54) **Elektromotorisch betriebenes Antriebsaggregat, insbesondere für Mehrzweck-Küchenmaschinen.**

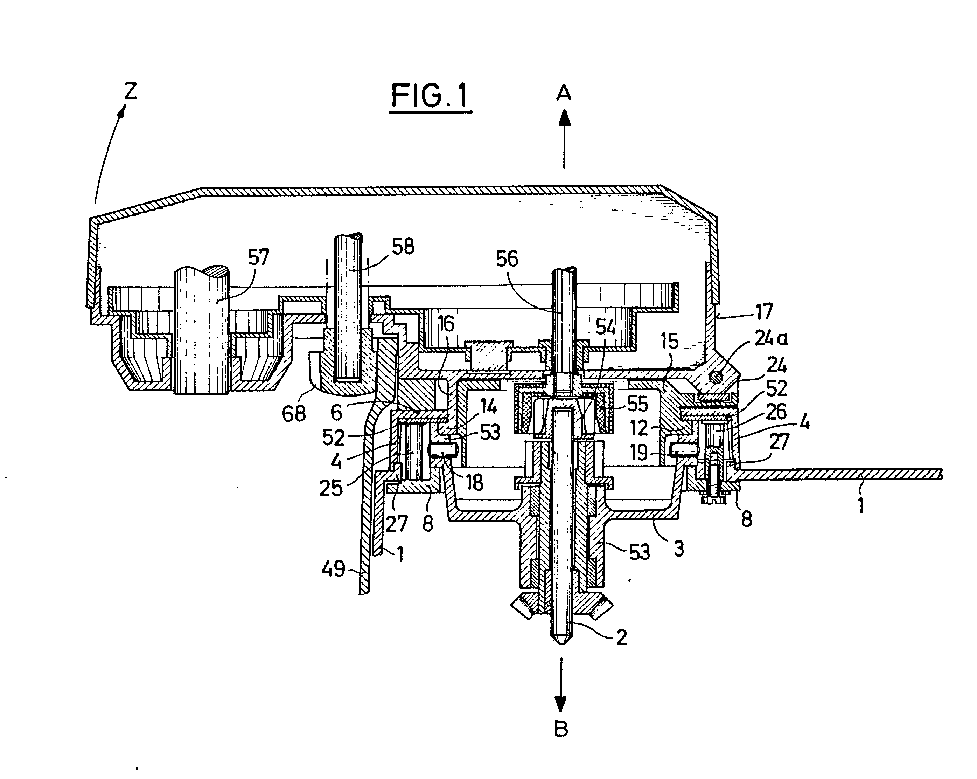

(57) Der etwa in Form eines Parallelflachs ausgebildete Motorsockel (1) weist an seiner Oberseite einen unverdrehbaren Aufnahmering (3) auf (Figure 1), der die lotrecht angeordnete, vom Motor angetriebene Zapfwelle (2) umgreift und der der Aufnahme und Halterung eines Rührarms (17) oder eines Aufsatzgeräts, beispielsweise eines Schnitzelwerks dient. Um einen festen Sitz des mit einem Sockel (15) versehenen Rührarms (17) zu bewirken, ist ein drehbar und den Aufnahmering (3) umgreifender Spannring (4) mit Betätigungsarm (5) vorgesehen, dessen mit Aussparungen (9, 10, 11) ausgestattetes Flanschteil (6) die Nasen (13, 14) des Rührarms (17) in der Verriegelungsposition fest gegen den Aufnahmering (3) preßt. Für die Halterung eines Aufsatzgeräts ist der Sockel des Aufsatzgeräts mit Schlitzen ausgestattet, in die beim Drehen des Spannrings (4) Bolzen (18, 19, 20) eintreten, die am Aufnahmering (3) befestigt sind, wobei außerdem der Betätigungsarm (5) des Spannrings (4) mit einem innen liegenden Schieber ausgestattet ist, der einerseits mit einer im Motorsockel (1) verschiebbar gelagerten Sperrstange zusammenwirkt, die vom Motorschalter bewegt wird und der andererseits mit einem Verriegelungsbolzen zusammenarbeitet, der Teil des Aufsatzgeräts ist und dessen Kopfteil in einen Schlitz des Schiebers eintritt (in der Verriegelungsposition). Der Verriegelungsbolzen ist außerdem mit einer Öffnung versehen, in die (in der Verriegelungsposition) ein Verriegelungsfinger einfaßt, der Teil des Deckels des Aufsatzgeräts ist. Um den Rührarm (17) gegenüber dem Motorsockel (1) in eine Ruheposition verschwenken (Pfeilrichtung Z) zu können, ist der Sockel (15) über ein Gelenk oder Scharnier (24, 24 a) mit dem Rührarm (17) verbunden, wobei außerdem die am Rührarm (17) fest angeordneten Finger (16, 16 a) mit ihren Nasen (13, 14) vom Spannring (4) mit Flanschteil (6) beim Verschwenken im Öffnungssinne frei gegeben werden, während die Nase (12) des Sockels (15) fest zwischen der Schulter (53) und dem Flanschteil (6) bzw. dem Ring (52) arretiert bleibt.

./...

EP 0 063 241 A1

FIG.1

Die Erfindung betrifft ein elektromotorisch betriebenes Antriebsaggregat, insbesondere für Küchenmaschinen, mit einem mindestens eine Zapfwelle aufweisenden Motorsockel, an dem antreibbare Werkzeuge, Rührarme und Zusatzgeräte wie Mixaufsätze, Schnitzelwerke oder dergleichen ansetzbar sind.

Es ist eine Küchenmaschine bekannt (DE-PS 25 51 842), bei der das Antriebsaggregat schwenkbar an einem Ständer befestigt ist, wobei das Antriebsaggregat aus dem den Antriebsmotor aufnehmenden Teil, einem Rührarm, durch den die Motorwelle hindurchgeführt ist und einem Getriebekopf mit Planetengetriebe besteht. Der Getriebekopf weist zwei verschiedene Zapfwellen auf und kann mit verschiedneen Werkzeugen, wie einem Rührbesen oder Knethaken oder auch mit Arbeitsgeräten wie beispielsweise einem Schnitzelwerk ausgestattet werden. Diese bekannte Küchenmaschine hat den Nachteil, daß der hohe Ständer während der Benutzung des Geräts zu Schwingungen neigt, weshalb das Gerät vergleichweise laut läuft.

Bei einer anderen bekannten Küchenmaschine (DAS 1 132 689) ist der Antriebsmotor in einem kastenförmigen, flachen Antriebssockel zusammen mit den Zapfwellen untergebracht, wobei die Antriebe auf der Oberseite des Antriebssockels angeordnet sind. Die Arbeitsgeräte selbst werden über einen Aufsetzsockel, der mit Verriegelungsmitteln versehen ist, mit dem Antriebssockel gekuppelt. Diese Küchenmaschine eignet sich jedoch nicht für den Betrieb einer umlaufenden Rührschüssel mit sich darin bewegenden Knet- und Rührhaken.

Schließlich ist eine Mehrzweck-Küchenmaschine bekannt (DAS 1 083 993) mit einem am Gerätesockel fest angebrachten Fußausleger, auf dem eine abnehmbare Rührschüssel drehbar gelagert ist und mit einem auf dem Gerätesockel aufsetzbaren Getriebearm mit zwei Abtriebswellen, von denen die eine die Rührschüssel von oben und die andere das Arbeitswerkzeug antreibt.

Diese Mehrzweck-Küchenmaschine hat jedoch den Nachteil, daß der Getriebearm vom Gerätesockel entfernt werden muß, wenn die Rührschüssel benötigt wird.

Der vorliegenden Erfindung liegt die Aufgabe zugrunde, ein Antriebsaggregat für eine Mehrzweck-Küchenmaschine zu schaffen, an die wahlweise ein Getriebearm oder Rührarm oder ein Zusatzgerät ankuppelbar ist, wobei bei angekuppeltem Zusatzgerät der Motor-Schalter am Motorsockel nur betätigbar sein soll, wenn der Behälter des Zusatzgeräts geschlossen ist. Darüber hinaus soll der Getriebearm mit dem Motorsockel derart kuppelbar sein, daß er in einer ersten Verriegelungs-Position am Motorsockel kippbar gehalten ist und erst in einer zweiten Verriegelungs-Position (Arbeitsstellung) mit diesem fest gekuppelt ist.

Schließlich ist es Aufgabe dieser Erfindung, ein Antriebsaggregat zu schaffen, das aus mehreren Gerätschaften besteht, die nach Benutzung voneinander trennbar sind, ohne Zuhilfenahme von Werkzeug. Das Antriebsaggregat soll darüberhinaus besonders ruhig arbeiten und einen niedrigen Schwerpunkt aufweisen, wobei das Aggregat so ausgebildet sein soll, daß die Gefahr von Verletzungen für die Bedienperson sicher ausgeschlossen wird.

Erfindungsgemäß wird dies dadurch erreicht, daß der Motorsockel einen die Zapfwelle umgreifenden mit dem Motorsockel fest verbundenen Aufnahmering aufweist, wobei ein den Aufnahmering umfassender Spannring mit Betätigungsarm vorgesehen ist, der schwenkbar gelagert ist und der gegen ein Verschieben in Zapfwellen-Längsrichtung durch ein Flanschteil und einen mit dem Flanschteil verbundenen Klemmring gesichert ist, und wobei das Flanschteil Aussparungen aufweist, durch die sich radial erstreckende Nasen eines in den Aufnahmering einsetzbaren Sockels eines Werkzeugträgers oder Rührarms hindurchgreifen.

Der Aufnahmering ist mit Vorteil mit sich radial erstreckenden Bolzen versehen, die mit Ausnehmungen und/oder Schlitzen zusammenwirken, die am Sockel eines Behälters vorgesehen sind.

Auf den Aufnahmering kann also wahlweise der Sockel eines Zusatzgeräts aufgesetzt werden, der mit Nasen versehen ist, die bei verschwenktem Spannring vom Flanschteil gehalten sind oder aber der Sockel eines anderen Zusatzgeräts, das Schlitze aufweist, in die nach dem Verschwenken des Spannrings Bolzen einfassen, die das Sockel-Teil fest arretieren. In einer bevorzugten Ausführungsform ist der Sockel über ein Scharnier, dessen Scharnierachse quer zur Längsachse der Zapfwelle angeordnet ist, schwenkbar mit dem Gehäuse des Rührarms verbunden, wobei der Rührarm eine oder mehrere Finger aufweist, die sich in der Arbeitsstellung des Rührarms lotrecht nach unten zu erstrecken und mit Nasen bis unter das Flanschteil des Spannrings greifen.

Damit sichergestellt ist, daß der Spannring die auf sein Flanschteil einwirkenden Spannkräfte bei angekuppeltem Zusatzgerät oder Rührarm gleichmäßig sicher auf den Motorsockel überträgt, ist der gegenüber dem Motorsockel schwenkbar gelagerte Spannring über Nute, Schrauben oder Stehbolzen mit dem Klemmring verbunden, wobei Spannring und Klemmring den inneren Rand eines ringförmigen Kragens des Gehäuses des Motorsockels umgreifen.

In einer Ausführungsform, die die sichere Kupplung eines Aufsatzgeräts, beispielsweise eines Schnitzelwerks, mit dem Motorsockel gestattet, weist der Betätigungsarm des Spannrings eine Öffnung auf, durch den ein Verriegelungsbolzen hindurchtritt, der am Behälter des Aufsatzgeräts verschiebbar gelagert und über den Deckel bewegbar ist und den Deckel in der verriegelten Position arretiert.

Um den Verriegelungsbolzen gegen ein unbeabsichtigtes Verschieben im Öffnungssinne zu halten, weist der Verriegelungsbolzen an seinem dem Deckel abgekehrten Ende ein Kopfteil mit einer Nut auf, die zum Zwecke der Verriegelung in einen Schlitz eintritt, der neben einer Eintrittsöffnung in einem Schieber vorgesehen ist, der relativ zum Betätigungsarm verschiebbar gelagert ist, wobei der Schieber mit einer Sperrstange zusammenwirkt, die den elektrischen Schalter zum Einschalten des Antriebsmotors arretiert oder freigibt.

Damit das Aufsatzgerät problemlos bei abgeschaltetem Motor vom Motorsockel abnehmbar ist, ist der Schieber von einer Feder beaufschlagt, die auf den Schieber im Entriegelungssinne einwirkt, wobei eine Sperrstange vorgesehen ist, die über den elektrischen Motorschalter bewegbar ist, und den Schieber im Sperrsinne gegen Federkraft verschiebt.

Vorzugsweise ist der Deckel des Geräteaufsatzes nach dem Aufsetzen auf den Behälter um die Behälterachse drehbar gehalten und geführt, wobei eine Auflauframpe am Deckelrand den Verriegelungsbolzen im Verriegelungssinne gegen die Kraft eier Feder verschiebt und wobei ein am Deckelrand angeordneter Verriegelungsfinger durch eine Öffnung im Verriegelungsbolzen hindurchtritt und dieser gleichzeitig mit seinem Kopfteil durch die Öffnung im Schieber und die Öffnung im Betätigungsarm hindurchtritt.

Damit sichergestellt ist, daß der Deckel des Zusatzgeräts, beispielsweise eines Schnitzelwerks, bei eingeschaltetem Motor nicht geöffnet und vom Behälter des Zusatzgeräts abgenommen werden kann, weist in einer bevorzugten Ausführungsform der am Deckelrand des Deckels vorgesehene Verriegelungsfinger eine Kralle auf, die nach dem Durchtritt des Verriegelungsfingers durch die Öffnung im Verriegelungsbolzen eine Drehung des Deckels um die Behälterachse relativ zum Behälter verhindert.

Vorzugsweise weist das Flanschteil des schwenkbaren Spannrings eine konzentrische Öffnung für den Durchtritt des Sockels auf, wobei eine sich von der Öffnung aus radial erstreckende Aussparung vorgesehen ist, durch die die Nase des Sockels des Rührarms in der Ausgangsstellung seines Schwenkbereichs hindurchfaßt und wobei zwei weitere sich von der Öffnung aus radial erstreckende Aussparungen vorgesehen sind, durch die die Nasen des Rührarms hindurchfassen. Durch diese Ausbildung des Flanschteils des Spannungsrings wird erreicht, daß bei einem Rührarm, dessen Sockel 3 Nasen aufweist, einer einaxiales Verschieben des Sockels im Aufnahmering verhindert, während die beiden anderen ein Abkippen des Rührarms gegenüber dem Sockel unmöglich machen.

In einer bevorzugten Ausführungsform weist der Sockel des Geräteaufsatzes sich radial erstreckende Schlitze oder Ausnehmungen auf, in die die Bolzen des Aufnahmerings eingreifen, wenn der Spannring zusammen mit dem Geräteaufsatz in die Verriegelungsposition gedreht ist.

Ein Vorteil des erfindungsgemäßen Antriebsaggregats besteht darin, daß alle Werkzeuge, Zusatzgeräte und auch der Rührarm auf der Oberseite des Motorsockels befestigbar sind, weshalb der Motorsockel eine sehr flache, quaderförmige und damit standfeste Ausbildung erhalten kann, wobei der Rührarm einerseits in seiner Arbeitsstellung auf besonders solide Weise mit dem Motorsockel gekuppelt ist und andererseits - nach Betätigen des Spannrings im Öffnungssinne - vom Motorsockel abkippbar ist, und zwar derart, daß gleichzeitig die Verbindung zwischen der Zapfwelle und der Antriebswelle des Rührarms unterbrochen ist.

Ein weiterer Vorteil des Antriebsaggregats nach der Erfindung besteht darin, daß auf eine besondere elektrisch arbeitende Bremseinrichtung für den Motor, die nach Öffnen des Deckels des Zusatzgeräts den Motor abbremst, verzichtet werden kann, da das Öffnen des Deckels überhaupt nur nach dem Abschalten des Motors möglich ist.

Schließlich besteht ein Vorteil des erfindungsgemäßen Antriebsaggregats darin, daß eine Vielzahl unterschiedlicher Werkzeuge, Zusatzgeräte oder Getriebearme vorgesehen sein können, die alle über einen einzigen Aufnahmering mit dem Motorsockel kuppelbar sind und daß deshalb keinerlei zusätzliche Schutzkappen zum Abdecken von Zapfwellen und/oder Aggregatkupplungen notwendig sind.

Der nach der vorliegenden Erfindung etwa in Form eines Parallelflachs ausgebildete Motorsockel weist einen Werkzeugträger oder Rührarm auf, der in der Arbeitsstellung den Motorsockel seitlich überragt, wobei die Rührschüssel sich am Motorsockel mit ihrer Unterseite auf einer sich unterhalb des Rührarms angeordneten, vom Motorsockel seitlich abstehenden Fußleiste, abstützt.

Die Rührschüssel ist dabei an ihrem oberen Rand zwischen dem Antriebsritzel und Gleitstücken in der Arbeitsstellung vom Rührarm gehalten und geführt.

Um die Gefahr einer Verletzung der Bedienperson sicher auszuschließen, weist der Motorsockel nach der Erfindung im Bereich der Berührungsfläche zwischen Motorsockel und Rührschüssel eine oder mehrere sich etwa lotrecht erstreckende Kanten, Leisten oder Wülste auf, die sich bis nahe an die Außenwandung der Rühr- schüssel heranerstrecken.

Die Erfindung läßt die verschiedensten Ausführungsmöglichkeiten zu, eine davon ist in den anhängenden Zeichnungen schematisch dargestellt, und zwar zeigen

Fig. 1          den Teil-Längsschnitt durch den in die Arbeitsstellung verschwenkten Rührarm und einen Teil des Motorsockels mit Zapfwelle und den Schnitt durch die Aufnahme- und Spannvorrichtung,

Fig. 2        den Längsschnitt durch ein mit dem Motorsockel
              gekuppeltes Zusatzgerät mit Behälter und Behälterdeckel in der verriegelten Position,

Fig. 3        die Unterseite des Rührarms mit den beiden Fingern
              mit Nasen zum Verriegeln des Rührarms in der
              Arbeitsstellung (bei abgenommenem Sockel),

Fig. 4        einen Schnitt durch den Aufnahmering mit Spannring
              und Sockel für die Aufnahme des Behälters des
              Zusatzgeräts nach den Linien O-P gemäß Fig. 2,

Fig. 5        den Teil-Schnitt durch das Griffteil des Behälters
              des Zusatzgeräts gemäß Fig. 2 nach den Linien
              Q-R,

Fig. 6        die Draufsicht auf das Flanschteil des Spannrings

Fig. 7        die Teil-Ansicht in Pfeilrichtung U gemäß Fig. 4
              auf den Sockel des Aufsatzgeräts

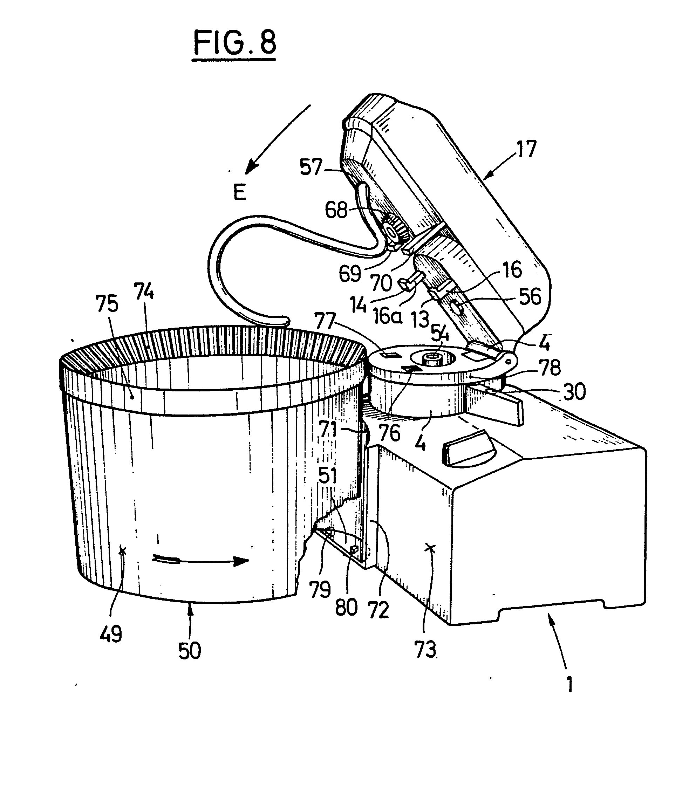

Fig. 8        das Aggregat mit aufgesetztem Rührarm und angesetzter Rührschüssel in perspektivischer
              Darstellung.

Wie Fig 1 zeigt, ist am Gehäuse des Motorsockels 1 ein die
Zapfwelle 2 umfassender Spannring 4 drehbar gelagert, der von
einem Klemmring 8 gehalten ist, der seinerseits über Stehbolzen
25, 26 am Flanschteil 6 des Spannrings 4 befestigt ist, wobei der
Spannring 4 durch einen Kragen 27 des Motorsockels 1 an einer
seitlichen Verschiebung gehindert ist. Zwischen dem Flanschteil 6
bzw. einem am Flanschteil 6 anliegenden Ring 52 einerseits und
dem Klemmring 8 andererseits ist der Aufnahmering 3 gehalten,
dessen Schulter 53 der Lagerung der Zapfwelle 2 dient.

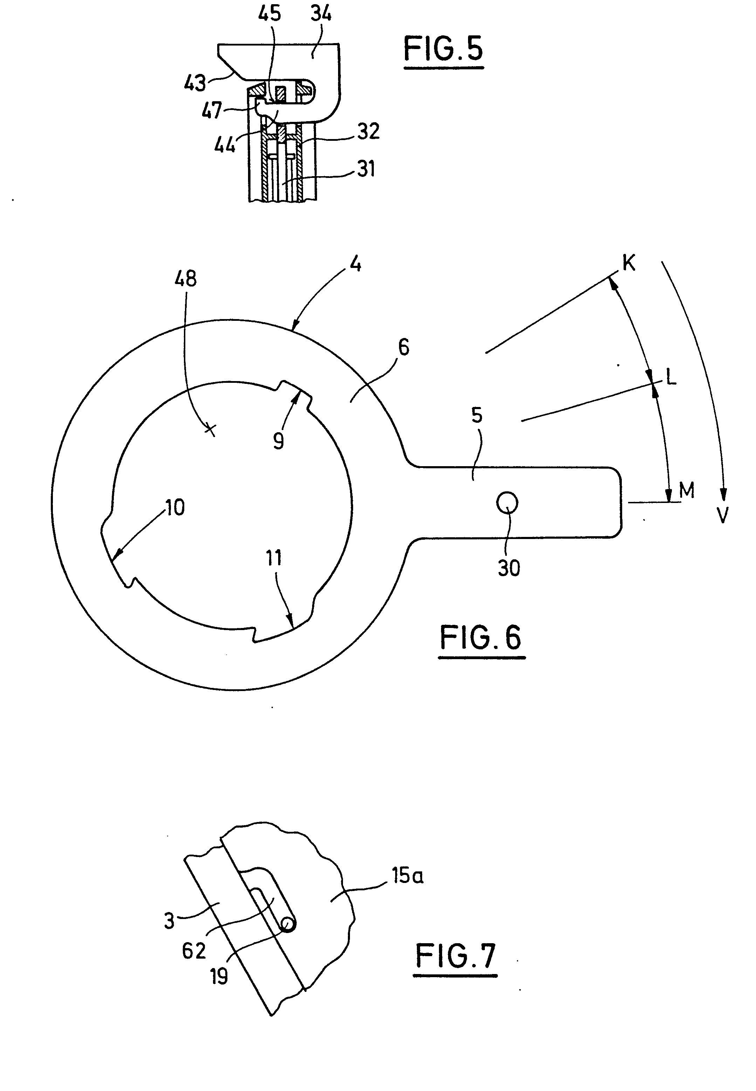

In den Aufnahmering 3 ist von obenher der Sockel 15 des Rührarms 17 eingesetzt, dessen Nase 13 gegen ein Verschieben in Pfeilrichtung A vom Flanschteil 6 bzw. dem Ring 52 arretiert wird, sobald das Flanschteil 6 bzw. der Spannring 4 von der Ausgangsposition (Position K) in die Position L (Fig. 6) verschwenkt wird (um die Achse A-B, Fig. 1).

Fig. 1 zeigt den in die Arbeitsstellung verschwenkten Rührarm 17, wobei die Finger 16, 16 a mit ihren Nasen 13, 14 unter das Flanschteil 6 greifen, wobei sie von diesem gegen die Schulter 53 gepreßt (sofern der Spannring 4 mit Flanschteil 6 in die Position M verschwenkt worden ist, Fig. 6) werden.

Der Rührarm 17 ist über ein Scharnier 24 mit dem Sockel 15 verbunden, so daß dieser in Pfeilrichtung Z um den Scharnierstift 24 a in eine Ruhestellung schwenkbar ist, wenn die Finger 16, 16 a bzw. deren Nasen 13, 14 vom Flanschteil 6 freigegeben sind.

In der Arbeitsstellung greift die mit einer Stirnverzahnung 54 versehene Zapfwelle 2 in die entsprechende Stirnverzahnung 55 der Getriebewelle 56 ein, wobei über das nicht näher dargestellte Getriebe des Rührarms 17 die Werkzeugwelle 57 und die Antriebswelle 58 mit der Zapfwelle 2 gekuppelt sind und von dieser bewegt werden.

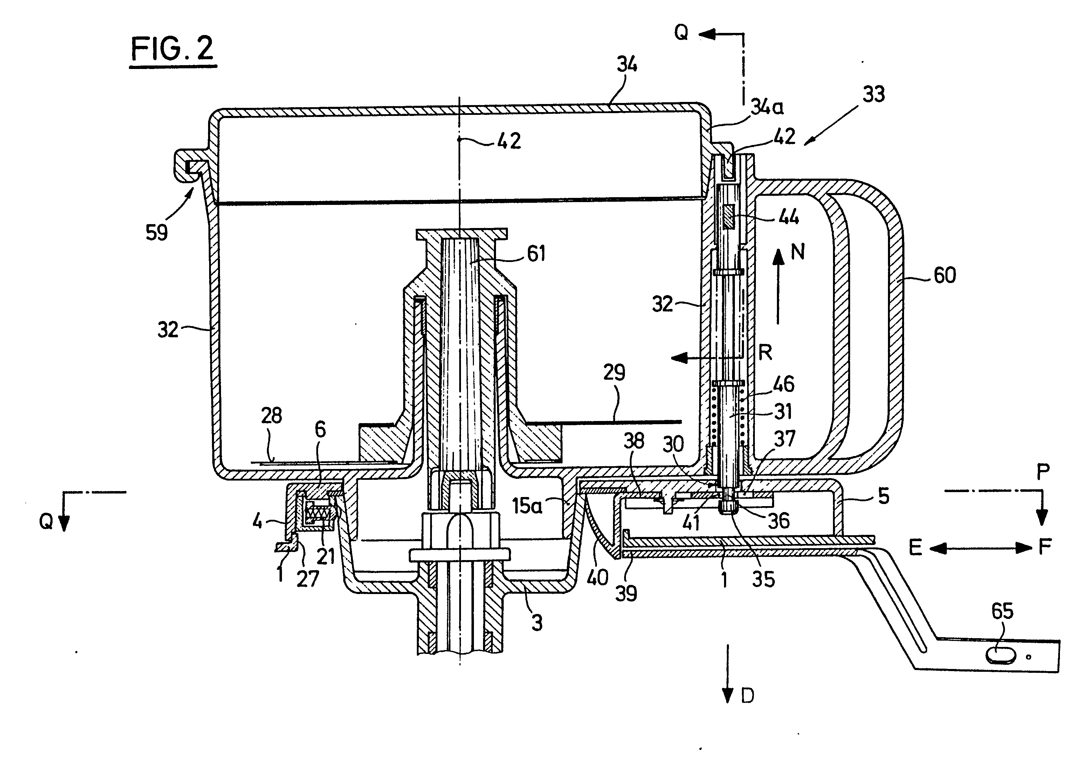

Fig. 2 zeigt einen Geräteaufsatz 33 mit in einem Behälter 32 umlaufenden Schnitzel-Messern 28, 29, einem über ein Bajonett 59 mit dem Behälter 32 verbundenen Deckel 34, einem Griffteil 60, einem Sockel 15 a und einer Messerwelle 61.

Vor dem Einsetzen des Sockels 15 a in den Aufnahmering 3 wird der Deckel 34 um die Achse 42 im Schließsinne gedreht, wobei über das Bajonett 59 eine feste, formschlüssige Verbindung mit dem Behälter 32 hergestellt wird. Gleichzeitig tritt der Verriegelungsfinger 44 in die Öffnung 45 des Verriegelungsbolzens 31 ein und arretiert den Bolzen 31 in der in Fig. 2 dargestellten Lage.

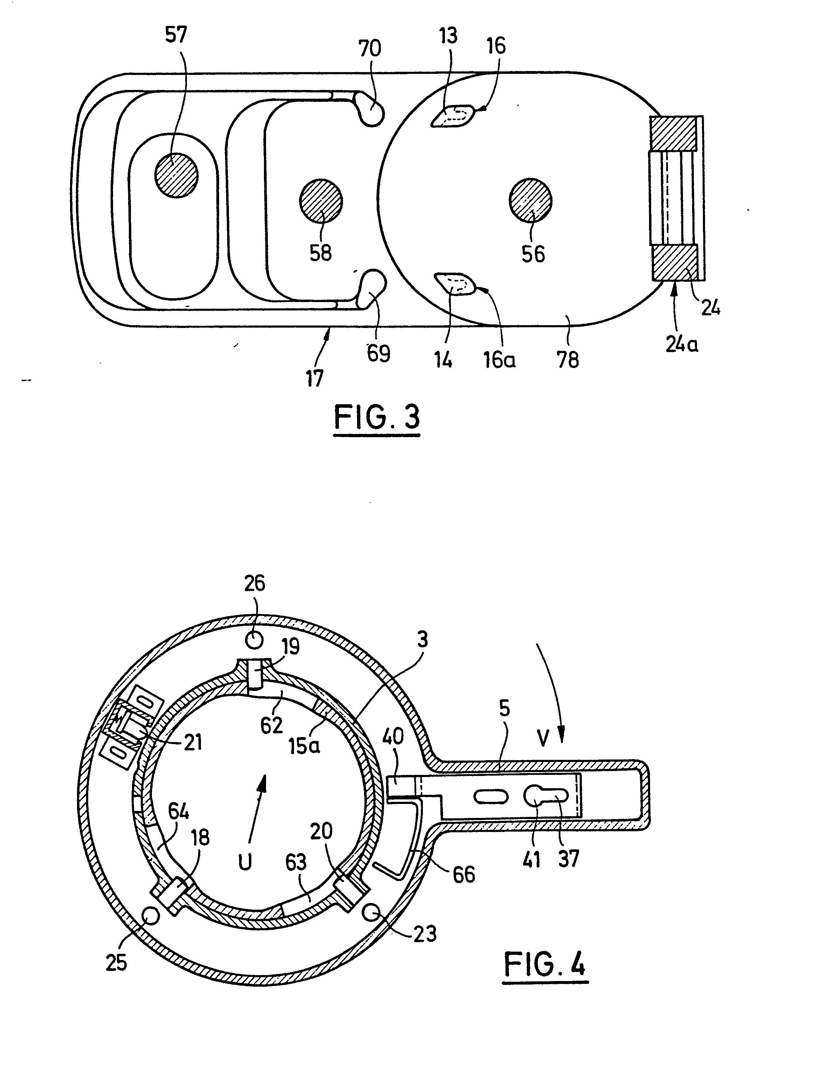

Der Behälter 32, der in den Aufnahmering 3 eingesetzt ist, läßt sich nun zusammen mit dem Spannring 4 verschwenken, da der Verriegelungsbolzen 31 durch die Öffnung 30, 41 hindurchgreift und die Bolzen 18, 19, 20 (Fig. 4) dabei in Ausnehmungen 62, 63, 64 im Sockel 15 a eintreten (Fig. 4).

Wenn der Behälter 32 zusammen mit dem Spannring 4 soweit verschwenkt ist, daß die 3 Bolzen 18, 19, 20 ihre Endposition in den entsprechenden Ausnehmungen 62, 63, 64 eingenommen haben, dann kann der Motor (nicht näher dargestellt) eingeschaltet werden. Ein am Schaltknopf des elektrischen Motorschalters angeordneter Zapfen, der in die Öffnung 65 einfaßt, schiebt während des Einschaltvorgangs die Sperrstange 39 in Pfeilrichtung E und nimmt dabei den Schieber 38 gegen die Kraft der Feder 40 mit. Dabei tritt die Nut 36 des Verriegelungsbolzens 31 in den Schlitz 37 ein und verriegelt so den Verriegelungsbolzen 31 am Betätigungsarm 5 des Spannrings 4. Das Kopfteil 35 verhindert in dieser Position, daß der Verriegelungsbolzen 31 sich in Pfeilrichtung N bewegen kann. Erst wenn die Sperrstange 39 in Pfeilrichtung F zurückbewegt ist, d.h. bei ausgeschaltetem Motor, kann der Behälter 32 vom Motorsockel 1 abgenommen und der Deckel 34 wieder geöffnet werden, da nur in der in Fig. 2 dargestellten Position des Schiebers 38 bzw. der Sperrstange 39 der Verriegelungsbolzen 31 mit seinem Kopfteil 35 sich aus der Öffnung 41 (durch die Kraft der Feder 46 bewegt) in Pfeilrichtung N bewegen kann.

Wie die Figuren 2 und 4 zeigen, ist am Spannring 4 bzw. am Flanschteil 6 eine von einer Feder beaufschlagte Rastnase 21 vorgesehen, die in der Verriegelungsposition M (siehe Figur 6) in eine Vertiefung im Aufnahmering einrastet und so den Spannring 4 gegen ein unbeabsichtigtes Verschwenken sichert. Mit 66 ist ein am Motorsockel 1 fest angeordneter Anschlag bezeichnet, der ein zu weites Verdrehen des Spannrings 4 mit Betätigungsarm 5 in Pfeilrichtung V (Fig. 4), d. h. im Schließsinne, verhindert.

Der etwa in Form eines Parallelflachs ausgebildete Motorsockel 1 weist an seiner Oberseite einen Spannring 4 auf, auf dem der Flansch 78 mit Hilfe des in Fig. 1 näher dargestellten Bajonetts verriegelt ist, wobei der Rührarm 17 über ein Scharnier 24, 24 a mit dem Sockel 15 verbunden ist. An der Seitenfläche 73 des Motorsockels 1 ist eine Fußleiste 51 angeordnet, auf der sich die Rührschüssel 49 mit ihrer Unterseite 50 abstützt. Die Rührschüssel 49 besitzt eine Innenverzahnung 74, die bei in Pfeilrichtung E abgesenktem Rührarm 17 mit dem Antriebsritzel 68 zusammenwirkt, wobei das Antriebsritzel 68 die außen liegende Kante 75 der Rührschüssel 49 gegen die am Rührarm 17 angeordneten Gleitstücke 69, 70 drückt.

Bei in Pfeilrichtung E abgesenktem Rührarm 17 fassen die Verriegelungsfinger 16, 16 a durch die Ausnehmungen 76, 77 und in die Aussparungen 10,11 des Flanschteils 6 und werden dort verriegelt.

Um eine Verletzung insbesondere der Hände der Bedienperson auszuschließen, ist an der der Rührschüssel 49 zugekehrten Seitenfläche 73 des Motorsockels ein sich etwa lotrecht erstreckende Leiste oder Wulst 72 angeordnet, der sich vom Motorsockel 1 aus bis nahe an die Außenwandung der Rührschüssel 49 heran erstreckt.

Mit 79 und 80 sind zwei Gleitstücke bezeichnet, auf denen die Unterseite 50 der Rührschüssel 49 gleitet, wozu die Rührschüssel 49 mit einer entsprechenden Ringnut auf der Unterseite 50 ausgestattet ist.

Auflistung der Einzelteile

| | | | |
|---|---|---|---|
| 1. | Motorsockel | 33. | Geräteaufsatz |
| 2. | Zapfwelle | 34. | Deckel |
| 3. | Aufnahmering | 34 a. | Deckelrand |
| 4. | Spannring | 35. | Kopfteil |
| 5. | Betätigungsarm | 36. | Nut |
| 6. | Flanschteil | 37. | Schlitz |
| 8. | Klemmring | 38. | Schieber |
| 9. | Aussparungen | 39. | Sperrstange |
| 10. | Aussparungen | 40. | Feder |
| 11. | Aussparungen | 41. | Eintrittsöffnung |
| 12. | Nasen | 42. | Behälterachse |
| 13. | Nasen | 43. | Auflauframpe |
| 14. | Nasen | 44. | Verriegelungsfinger |
| 15. | Sockel | 45. | Öffnung |
| 15 a. | Sockel | 46. | Feder |
| 16 | Finger | 47. | Kralle |
| 16 a. | Finger | 48. | Öffnung |
| 17. | Rührarm | 49. | Rührschüssel |
| 18. | Bolzen | 50. | Rührschussel-Unterseite |
| 19. | Bolzen | 51. | Fußleiste |
| 20. | Bolzen | 52. | Ring |
| 21. | Rastnase | 53. | Schulter |
| 22. | Behälter | 54. | Stirnverzahnung |
| 23. | Stehbolzen | 55. | Stirnverzahnung |
| 24. | Scharnier | 56. | Getriebewelle |
| 24 a. | Scharnierstift | 57. | Werkzeugwelle |
| 25. | Stehbolzen | 58. | Antriebswelle |
| 26. | Stehbolzen | 59. | Bajonett |
| 27. | Kragen | 60. | Griffteil |
| 28. | Schnitzelmesser | 61. | Messerwelle |
| 29. | Schnitzelmesser | 62. | Ausnehmung |
| 30. | Öffnung | 63. | Ausnehmung |
| 31. | Verriegelungsbolzen | 64. | Ausnehmung |
| 32. | Behälter | 65. | Öffnung |

0063241

– 12 –

66. Anschlag
67. Rührschüssel-Oberrand
68. Antriebsritzel
69. Gleitstücke
70. Gleitstücke
71. Berührungsfläche
72. Wulst
73. Seitenfläche
74. Innenverzahnung
75. außen liegende Kante
76. Ausnehmung
77. Ausnehmung
78. Flansch
79. Gleitstück
80. Gleitstück

Patentansprüche

1. Elektromotorisch betriebenes Antriebsaggregat, insbesondere für Mehrzweck-Küchenmaschinen, mit einem mindestens eine Zapfwelle aufweisenden Motorsockel, an dem antreibbare Werkzeuge, Rührarme und Zusatzgeräte wie Mixaufsätze, Schnitzelwerke oder dergleichen ansetzbar sind, dadurch gekennzeichnet, daß der Motorsockel (1) einen die Zapfwelle (2) umgreifenden mit dem Motorsockel (1) fest verbundenen Aufnahmering (3) aufweist, wobei ein den Aufnahmering (3) umfassender Spannring (4) mit Betätigungsarm (5) vorgesehen ist, der drehbar gelagert ist und der gegen ein Verschieben in Zapfwellen-Längsrichtung (A-B) durch ein Flanschteil (6) und einen mit dem Flanschteil (6) verbundenen Klemmring (8) gesichert ist und wobei das Flanschteil (6) Aussparungen (9, 10, 11) aufweist, durch die sich radial erstreckende Nasen (13, 14) eines in den Aufnahmering (3) einsatzbaren Sockels (15) eines Werkzeugträgers oder Rührarms (17) hindurchgreifen.

2. Elektromotorisch betriebenes Antriebsaggregat, insbesondere für Mehrzweck-Küchenmaschinen, mit einem mindestens eine Zapfwelle aufweisenden Motorsockel, an den antreibbare Werkzeuge, Rührarme und Zusatzgeräte wie beispielsweise Mixaufsätze, Schnitzelwerke oder dergleichen ansetzbar sind, dadurch gekennzeichnet, daß der Motorsockel (1) einen die Zapfwelle (2) umgreifenden, mit dem Motorsockel (1) fest verbundenen Aufnahmering (3) aufweist, wobei ein den Aufnahmering (3) umfassender Spannring (4) mit Betätigungsarm (5) vorgesehen ist, der drehbar gelagert ist und der gegen ein Verschieben in Zapfwellen-Längsrichtung (A-B) durch ein Flanschteil (6) und einen mit dem Flanschteil (6) verbundenen Klemmring (8) gesichert ist und wobei der Aufnahmering (3) sich radial nach innen zu erstreckende Bolzen (18, 19, 20) aufweist, die mit Ausnehmungen und/oder Schlitzen (62, 63, 64) zusammenwirken, die am Sockel (15 a) des Behälters (32) vorgesehen sind.

3. Elektromotorisch betriebenes Antriebsaggregat nach Anspruch 1, dadurch gekennzeichnet, daß der Sockel (15) über ein Scharnier (24), dessen Scharnierstift (24 a) quer zur Längsachse der Zapfwelle (2) angeordnet ist, schwenkbar mit dem Gehäuse des Rührarms (17) verbunden ist, wobei der Rührarm (17) einen oder mehrere Finger (16) aufweist, die sich in der Arbeitsstellung des Rührarms (17) lotrecht nach unten zu erstrecken und mit Nasen (13, 14) bis unter das Flanschteil (6) des Spannringes (4) greifen.

4. Elektromotorisch betriebenes Antriebsaggregat nach den Ansprüchen 1 bis 3, dadurch gekennzeichnet, daß der gegenüber dem Motorsockel (1) schwenkbar gelagerte Spannring (4) über Nuten, Schrauben oder Stehbolzen (23, 25, 26) mit dem Klemmring (8) verbunden ist, wobei Spannring (4) und Klemmring (8) den inneren Rand eines ringförmigen Kragens (27) des Gehäuses des Motorsockels (1) umgreifen.

5. Elektromotorisch betriebenes Antriebsaggregat nach den Ansprüchen 2 und 4, dadurch gekennzeichnet, daß der Betätigungsarm (5) des Spannringes (4) eine Öffnung (30) aufweist, durch den ein Verriegelungsbolzen (31) hindurchtritt , der am Behälter (32) des Geräteaufsatzes (33) verschiebbar gelagert und über den Deckel (34) bewegbar ist (Pfeilrichtung D) und den Deckel (34) in der verriegelten Position arretiert.

6. Elektromotorisch betriebenes Antriebsaggregat nach den Ansprüchen 2, 4 und 5, dadurch gekennzeichnet, daß der Verriegelungsbolzen (31) an seinem dem Deckel (34) abgekehrten Ende ein Kopfteil (35) mit einer Nut (36) aufweist, die zum Zwecke der Verriegelung in einen Schlitz (37) eintritt, der neben einer Eintrittsöffnung (41) in einem Schieber (38) vorgesehen ist, der gegenüber dem Betätigungsarm (5) verschiebbar gelagert ist (Pfeilrichtung E-F), wobei der Schieber (38) mit einer Sperrstange (39) zusammenwirkt, die den elektrischen Schalter zum Einschalten des Antriebsmotors arretiert oder freigibt.

7. Elektromotorisch betriebenes Antriebsaggregat nach den Ansprüchen 2, 4, 5 und 6, dadurch gekennzeichnet, daß der Schieber (38) von einer Feder (40) beaufschlagt ist, die den Schieber (38) im Entriegelungssinne (Pfeilrichtung F) beaufschlagt, und daß eine Sperrstange (39) vorgesehen ist, die über den elektrischen Motorschalter bewegbar ist und den Schieber (38) im Sperrsinne (Pfeilrichtung E) gegen Federkraft verschiebt.

8. Elektromotorisch betriebenes Antriebsaggregat nach einem oder mehreren der vorhergehenden Ansprüche, dadurch gekennzeichnet, daß der Deckel (34) des Geräteaufsatzes (33) nach dem Aufsetzen auf den Behälter (32) um die Behälterachse (42) drehbar gehalten und geführt ist, wobei eine Auflauframpe (43) am Deckelrand (34 a) den Verriegelungsbolzen (31) im Verriegelungssinne (Pfeilrichtung D) gegen die Kraft einer Feder (46) verschiebt und wobei ein am Deckelrand (34 a) angeordneter Verriegelungsfinger (44) durch eine Öffnung (45) im Verriegelungsbolzen (31) hindurchtritt und dieser mit seinem Kopfteil (35) durch die Öffnung (41) im Schieber (39) und durch die Öffnung (30) im Betätigungsarm (5) hindurchtritt.

9. Elektromotorisch betriebenes Antriebsaggregat nach einem oder mehreren der vorhergehenden Ansprüche, dadurch gekennzeichnet, daß der am Deckelrand (34 a) des Deckels (34) vorgesehene Verriegelungsfinger (44) eine Kralle (47) aufweist, die nach dem Durchtritt des Verriegelungsfingers (44) durch die Öffnung (45) im Verriegelungsbolzen (31) eine Drehung des Deckels (34) um die Behälterachse (42) relativ zum Behälter (32) verhindert.

10. Elektromotorisch betriebenes Antriebsaggregat nach einem oder mehreren der vorhergehenden Ansprüche, dadurch gekennzeichnet, daß das Flanschteil (6) des schwenkbaren Spannrings (4) eine konzentrische Öffnung (48) für den Durchtritt des Sockels (15, 15 a) aufweist, wobei eine sich von der Öffnung (48) aus radial erstreckende Aussparung (9) vorgesehen ist, durch die die Nase (12) des Sockels (15) in der Ausgangsstellung (K) seines Schwenkbereichs (K, L, M) hindurchfaßt und wobei zwei weitere sich von der Öffnung (48) aus radial erstreckende Aussparungen (10, 11) vorgesehen sind, durch die die Nasen (13, 14) des Rührarms (17) hindurchfassen.

11. Elektromotorisch betriebenes Antriebsaggregat nach einem oder mehreren der vorhergehenden Ansprüche, dadurch gekennzeichnet, daß der Sockel (15 a) des Geräteaufsatzes (33) sich radial erstreckende Schlitze oder Ausnehmungen (62, 63, 64) aufweist, in die die Bolzen (18, 19, 20) des Aufnahmerings (3) eingreifen, wenn der Spannring (4) zusammen mt dem Geräteaufsatz (33) in die Verriegelungsposition (L bzw. M) gedreht ist.

12. Elektromotorisch betriebenes Antriebsaggregat nach einem oder mehreren der vorhergehenden Ansprüche, dadurch gekennzeichnet, daß der etwa in Form eines Parallelflachs ausgebildete Motorsockel (1) einen Werkzeugträger oder Rührarm (17) aufweist, der in der Arbeitsstellung den Motorsockel (1) seitlich überragt, wobei die Rührschüssel (49) sich am Motorsockel (1) mit ihrer Unterseite (50) auf einer sich unterhalb des Rührarms (17) angeordneten, vom Motorsockel (1) seitlich abstehenden Fußleiste (51), abstützt.

13. Elektromotorisch betriebenes Antriebsaggregat nach einem oder mehreren der vorhergehenden Ansprüche, dadurch gekennzeichnet, daß die Rührschüssel (49) an ihrem oberen Rand (67) zwischen dem Antriebsritzel (68) und den Gleitstücken (69, 70) in der Arbeitsstellung vom R ührarm (17) gehalten und geführt ist.

14. Elektromotorisch betriebenes Antriebsaggregat nach einem oder mehreren der vorhergehenden Ansprüche, dadurch gekennzeichnet, daß der Motorsockel (1) im Bereich der Berührungsfläche (71) zwischen Motorsockel (1) und Rührschüssel (49) eine oder mehrere sich etwa lotgerecht erstreckende Kanten, Leisten oder Wülste (72) aufweist, die sich bis nahe an die Außenwandung der Rührschüssel (49) heranerstrecken.

## FIG.1

0063241

## FIG.2

## FIG. 3

## FIG. 4

FIG.5

FIG.6

FIG.7

## FIG.8

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-1 181 870  (GOELZ) <br> * Insgesamt * | 1 | A 47 J  43/08 <br> A 47 J  43/04 |
| A | GB-A-  873 685  (KENWOOD) <br> * Seite  2,  Zeile 90 - Seite 3, Zeile 26; Figuren 6,10,11 * | 1,2 | |
| A | GB-A-  953 697  (DATLEY) <br> * Seite  2, Zeilen 3-39; Figuren 1-4 * | 1 | |
| A | US-A-4 026 532  (MADAN) <br> * Insgesamt * | 3 | |
| A | DE-B-1 125 601  (NUTONE) <br> * Insgesamt * | 2 | |
| A | DE-A-2 301 577  (RONSON) <br> * Insgesamt * | 1,2 | **RECHERCHIERTE SACHGEBIETE (Int. Cl. ³)** <br><br> A 47 J |
| A | NL-C-  110 380  (VAN DER HEEM N.V.) <br> * Insgesamt * | 6,7 | |
| A | US-A-2 771 280  (ANDIS) <br> * Figuren 1-4 * | 12,14 | |
| A | DE-A-1 429 819  (BOSCH) <br> * Insgesamt * | 13 | |

Der vorliegende Recherchenbericht wurde für alle Patentansprüche erstellt.

| Recherchenort <br> DEN HAAG | Abschlußdatum der Recherche <br> 15-07-1982 | Prüfer <br> SCHARTZ J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03 82

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 372 862   (STRAUSS et al.) | | |
| | --- | | |
| A | EP-A-0 004 987   (BRAUN) | | |
| | --- | | |
| D,A | DE-B-1 132 689   (LICENTIA) | | |
| | --- | | |
| D,A | DE-B-1 083 993   (BRAUN) | | |
| | --- | | |
| D,A | DE-A-2 551 842   (BOSCH SIEMENS) | | |
| | ----- | | RECHERCHIERTE SACHGEBIETE (Int. Cl. ³) |

Der vorliegende Recherchenbericht wurde für alle Patentansprüche erstellt.

| Recherchenort DEN HAAG | Abschlußdatum der Recherche 15-07-1982 | Prüfer SCHARTZ J. |
|---|---|---|